# EUROPEAN PATENT APPLICATION

(11) **EP 4 769 964 A1**
(43) Date of publication of application: **01.07.2026**
(21) Application number: 23824307.5
(22) Date of filing: 02.06.2023
(51) Int. Cl.: H04B 5/00

(54) **FINGER RING-TYPE ARTICLE FUNCTIONING AS AN NFC TRANSPONDER (VARIANTS)**

(30) Priority: 13.06.2022 KZ 20220523
(71) Applicant: Ayazbayev, Smatay Srymovich, 050020 d. 532 Almaty (KZ)
(72) Inventor: Ayazbayev, Smatay Srymovich, 050020 d. 532 Almaty (KZ)
(74) Representative: Herrero & Asociados, S.L.
(86) International application number: PCT/KZ2023/000011
(87) International publication number: WO 2023/244097

(57) **Abstract**

The present invention relates to contactless communication devices in which a transponder is configured in the form of a wearable ring. A ring-type device that functions as a near-field communication (NFC) transponder comprises a body made of an electrically conductive material, said body being an integral part of an electrical circuit that includes an antenna and an NFC chip. The ring body has an open shape with a through cut, which may be transverse, in the form of a straight line, or have a complex geometric shape. The ring body forms at least one washer of the transponder antenna, while the remaining washers are made up of conductors arranged inside the ring body, on its inner face adjacent to the finger, or are made up of conductors formed on a flexible printed circuit board (PCB).

## Description

### FIELD OF TECHNOLOGY

The present invention pertains to the field of contactless communication, specifically to electronic devices based on NFC technology, wherein the transponder (passive tag) is implemented in the form of a ring worn on a finger. This device is intended, in particular, for purposes such as user identification, payment transactions at a payment terminal, and facilitating both physical and logical access.

### PRIOR ART

Over the past decade, NFC (Near Field Communication) technology has gained widespread use across various areas of human activity. It involves the interaction of two electronic devices that exchange information via electromagnetic radiation. A key aspect is that this exchange occurs over a short distance of 3-10 cm.

In many cases, one of the two devices is passive, meaning it lacks an internal power source. Such a device can be compact and is referred to as an NFC transponder or NFC tag. The other device is active, emitting electromagnetic energy sufficient to power the transponder's electronic circuits and initiating mutual information exchange. This active device is commonly referred to as an NFC terminal.

A well-known example of NFC technology application is the process of paying for purchases in a store using a contactless bank card. In this case, the card acts as the transponder, while the store's card reader serves as the NFC terminal. To enable interaction and complete the payment, it is sufficient to maintain the required proximity between these two devices.

The core component of an NFC transponder is an integrated circuit chip. Each NFC chip has a unique internal digital identifier, ensured by the chip manufacturer. Duplicating or simulating a chip is virtually impossible, forming the basis for many NFC technology applications, such as:
- Contactless payment systems.
- Logical and physical access control systems.
- Personal identification.
- Public transportation systems.
- Counterfeit prevention.

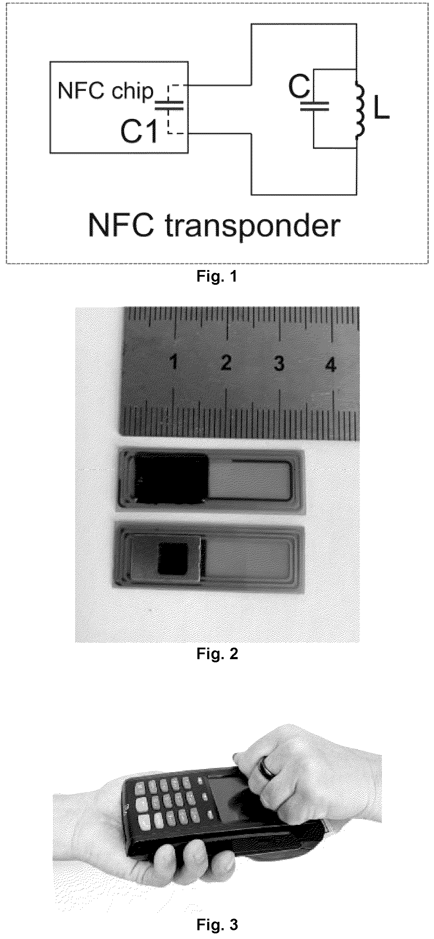

An NFC transponder is typically structured as follows: Figure 1 illustrates a standard electrical circuit of a transponder. The chip has at least two terminals to which an antenna is connected. An external capacitor C may be connected in parallel with the antenna. The NFC chip also includes an internal capacitance, conventionally designated as *C₁*

The antenna L, together with the internal capacitance *C₁* and the external capacitor *C*, forms a resonant circuit tuned to the resonance frequency of 13.56 MHz. [https://www.infineon.com/dgdl/InfineonDesign_guide_NFC_PWM_configuration_IC_an tenna_NLM001x-ApplicationNotes-v01_00-EN.pdf?fileld=5546d4627255dbad01727579a75e6795].

The resonance frequency is often achieved without the use of an external capacitor. Typically, the antenna consists of several looped turns and also serves to collect electromagnetic energy used to power the transponder chip. The number of turns and their geometry determine the amount of energy available for powering the chip. An essential factor for the functionality of the transponder is the design of the antenna. Figure 2 shows an industrial encapsulation-free transponder implemented on a flexible printed circuit board (FPCB).

The subject of the present invention is a form factor in the shape of a ring worn on a finger. Compared to other wearable items, a ring as a form factor offers several advantages:
- Can remain with the owner 24/7.
- Serves additionally as a piece of jewelry.
- Requires no attention or maintenance.
- Is unlikely to be lost.
- Causes no discomfort in any life circumstances.
- Allows for easy visual control.
- Allows simple and quick movement and positioning at the desired point in space.

These characteristics make it suitable for applications such as payment transactions, physical access, and personal identification. Figure 3 illustrates the moment of completing a purchase using a payment ring worn on a finger.

This form factor for devices enabling information exchange via electromagnetic radiation has been proposed, among others, in the following patent documents: [JP2003271910 (A) - 2003-09-26] and [GB2552654 (A) - 2018-02-07].

The first patent document discloses two variants of RFID (Radio Frequency Identification) data carriers of the ring type, suitable for personal identification and characterized by high portability.

The disadvantages of this technical solution include the following:
- In the case of the first implementation: The design provides for an antenna consisting of only a single loop. Considering that the diameter of this loop is approximately equal to the diameter of a human finger, the total magnetic flux passing through the antenna circuit will be insufficient to induce the required power in the antenna. Consequently, this results in an inadequate energy to power the chip. This design is non-functional with any currently available industrial RFID chip.
- In the case of the second implementation: The antenna is designed as a spiral and is entirely encapsulated in synthetic resin. This configuration does not allow the antenna to be made from a precious metal, nor does it permit the integration of the spiral into the visible part of the ring's body. As a result, the spiral cannot serve as a decorative element. Furthermore, creating a piece of jewelry from metal or a precious metal based on this design is impossible, as the metal would short-circuit the electromagnetic field.

The second patent document, [GB2552654 (A) - 2018-02-07], discloses a ring or bracelet comprising a circular shell, a near-field communication (NFC) relay mounted on the shell, and a loop antenna with multiple turns. Each turn extends around the entire circumference of the circular shell, which may be spaced apart across the ring's width or positioned in an annular groove running along the circumference.

The ring may be made of ceramic material and may feature a cover enclosing the transponder. It can also be fabricated from resin. The antenna can take the form of a coil made of wound metallic wire, a conductive trace on a flexible substrate along with an NFC transponder in the form of a chip, or it can be directly applied to the inner surface of the circular shell, potentially using electroplating or direct laser structuring techniques. The issue arises from the fact that, when the ring is made of a conductive material, the performance of the NFC loop antenna is significantly degraded. The magnetic field generated by the NFC terminal is weakened by an opposing magnetic field created by eddy currents induced in the conductive ring structure. This results in the transponder becoming non-functional. Since most jewelry is made from electrically conductive metals, particularly silver and gold, the inability to use a spiral antenna severely limits the adoption of this form factor.

A known contactless smart card [RU2735275 C2, published 29.10.2020] is described, which includes a microchip mounted on a dielectric substrate within a protective housing shaped as a ring. The device comprises a loop antenna whose terminals are connected to the microchip's terminals, as well as a capacitor placed on the dielectric substrate and connected in parallel with the loop antenna, forming with it the resonant circuit of the contactless smart card.

The dielectric substrate is designed as a ring with turns of conductive material that form the loop antenna. The protective housing, also shaped as a ring, is made from a conductive material and features a transverse technological slit filled with dielectric material. The housing includes an internal annular cavity where the dielectric substrate, microchip, loop antenna, capacitor, and conductive turns are secured.

The disadvantages of this technical solution include the following:
- The loop antenna is located inside the annular cavity and is surrounded by metal forming the protective housing of the ring. This metal shields the magnetic flux, adversely affecting the transponder's performance and reducing the stable communication range between the device and the terminal.
- The through transverse slit compromises the mechanical strength of the structure, making the ring prone to damage under radial, tangential, or axial forces. Additionally, the presence of the slit reduces the aesthetic appeal of the jewelry item.

A known smart ring for a finger [WO2020114076 (A1)-2020-06-11] incorporates a chip and a metallic ring used as an antenna. The chip is electrically connected to the metallic ring, forming an antenna circuit. The metallic body of the smart ring is designed as an integrated component of the antenna system, meaning the antenna is embedded within the metallic ring. This design optimizes space for the antenna, reduces the cost of additional antenna components, and enhances the flexibility and sophistication of product design.

The metallic ring features a slit and includes input and output contacts positioned on opposite sides of the slit, electrically connected to the chip.

The disadvantages of this technical solution include:
- The antenna consists of only a single loop-the ring-with a diameter approximately equal to that of a human finger. This design results in insufficient total magnetic flux through the antenna circuit to induce the required power, leading to inadequate energy for powering the chip.
- This configuration is non-functional for any currently available industrial NFC chip due to the insufficient number of loops. The number of loops required for stable operation typically ranges from 4 to 7.
- The slit compromises the mechanical strength of the structure, making the ring prone to damage.

A known utility model from China [CN207038721 (U) - 2018-02-23] describes an NFC antenna that incorporates a metallic ring. The ring's body is designed to accommodate the NFC antenna within its cavity and is included in a single electrical circuit with the NFC antenna and other components forming the transponder. According to the authors, this configuration reduces the attenuation of electromagnetic waves caused by the presence of the metallic housing in the NFC system, enhances the performance of the NFC antenna, and increases the reading distance.

The disadvantages of this technical solution include:
- The ring body, acting as a short-circuited loop (since the metallic ring is designed without a slit), although integrated into the antenna's electrical circuit, significantly weakens the intensity of the NFC terminal's electromagnetic field.

This results in degraded antenna performance, potentially rendering the design entirely non-functional.

The present invention aims to address these issues and overcome one or more of the identified shortcomings.

### DISCLOSURE OF THE INVENTION

The objective of the invention is to develop a ring-type product made from electrically conductive materials, particularly metals, for contactless payment of goods and services, featuring improved NFC transponder antenna performance and enhanced structural strength.

Technical Results:
1. Achieving stable interaction between the proposed product and an NFC terminal at the maximum possible distance for such products.
2. Enhancing the mechanical strength of the metallic ring structure incorporating an NFC transponder.
3. Expanding design possibilities for metallic jewelry in the form of a ring with an integrated NFC transponder, thereby broadening the product range.
4. Increasing manufacturability, enabling the miniaturization of this type of jewelry.

The stated objective is addressed by five variations of technical solutions for the proposed product, as disclosed below, ensuring the achievement of the aforementioned technical results.

### Variant 1

The proposed ring-type device with NFC transponder functionality comprises a body made of electrically conductive material. The ring body is integrated into a single electrical circuit along with an antenna and an NFC chip embedded in the product's NFC transponder.

The novelty lies in the ring body being designed in an open-loop form with a single through slit, which may be: transverse in the shape of a straight line, or complex (any possible) geometric shape different from a straight line.

In this configuration, the ring body is included in the electrical circuit of the product, forming at least one loop of the mentioned antenna. The remaining loops of the antenna are: constructed as a coil of electrical wire, or formed as conductors on a flexible printed circuit board (FPCB), which are placed in a groove (recess) in the ring body created on its inner side, adjacent to the finger. Alternatively, the ring body features a single through slit with a complex geometric shape different from a straight line and at least one additional surface groove along the ring's circumference, mirroring the shape of the through slit and forming a sequential pattern on the surface of the ring. Alternatively, the ring body features a single through slit with a complex geometric shape, along with additional grooves, which, together with the through slit form a pattern in a specific design on part of the ring's surface. Alternatively, the ring body includes a single through slit of any possible complex geometric shape different from a straight line. This slit is "concealed" by a decorative design element, such as a precious or semi-precious stone mounted above the slit.

### Variant 2

The proposed ring-type device with NFC transponder functionality comprises a body made of electrically conductive material, integrated into a single electrical circuit along with an antenna and an NFC chip embedded in the product's NFC transponder. The novelty lies in the ring body being designed in an open-loop form with one continuous transverse slit and at least one longitudinal slit. The ring body is included in the electrical circuit of the product, forming at least two loops of the antenna, while the remaining antenna loops are constructed either as a coil of electrical wire or as conductors on a flexible printed circuit board (FPCB), which are placed in a groove (recess) on the inner side of the ring body, adjacent to the finger.

### Variant 3

The proposed ring-type device with NFC transponder functionality comprises a body made of electrically conductive material, wherein the ring body is integrated into a single electrical circuit of the device together with an NFC chip embedded in the NFC transponder. The novelty lies in the fact that the ring body is designed in an open-loop form with a spiral slit, forming an antenna with the required number of loops, with the gaps between the loops filled with a polymer.

### Variant 4

The proposed ring-type device with NFC transponder functionality comprises a body made of electrically conductive material, wherein the ring body is integrated into a single electrical circuit of the device together with an NFC chip embedded in the NFC transponder. The novelty lies in the fact that the ring body is designed in an open-loop form as a metallic strip twisted into a ring shape, forming an antenna with the required number of loops, with one side of the twisted strip coated with a dielectric layer.

Furthermore, the device described in the above-mentioned Variants 1-4 may additionally include an external capacitor integrated into the electrical circuit along with the antenna and the NFC chip. This capacitor is positioned either in a recess formed on the inner side of the ring body or on the side surface of the ring body.

### Variant 5

The proposed ring-type device with NFC transponder functionality comprises a body made of electrically conductive material, wherein the ring body is integrated into a single electrical circuit with an NFC chip embedded in the NFC transponder.

The novelty lies in the fact that the body is formed from multiple metallic washers of the same diameter, each washer having a continuous transverse slit and designed to be sequentially connected to one another, forming an antenna. The number of washers corresponds to the number of necessary loops, and one side of the slit in one washer is electrically connected in series to one side of the slit in the adjacent washer via jumpers.

Additionally, the jumpers may be formed on a printed circuit board (PCB). Furthermore, the NFC chip is mounted on the PCB. The PCB also hosts an external capacitor integrated into the electrical circuit along with the NFC chip and the ring body.

This is the first instance of proposing the use of a metallic ring body with NFC transponder functionality worn on the finger to improve the quality of interaction with an NFC terminal.

Unlike the prior art, where the metallic body of the ring negatively affects the transponder's performance, the proposed design solutions for the metallic body and its integration into the transponder circuit enhance the quality of the transponder-terminal connection.

This improvement is achieved by using the metallic ring body at least as one additional turn of the loop antenna or as the antenna itself.

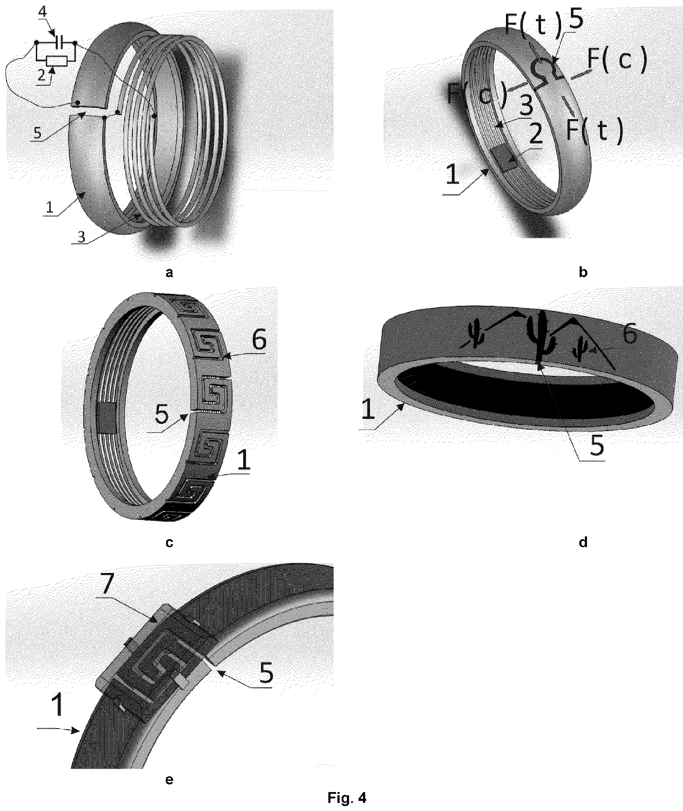

The invention also proposes a ring with a slit of complex geometric shape, such as an omega-shaped slit (Fig. 4b), which significantly increases the structural strength of the design depicted in Fig. 4a.

The continuous through slit is designed to be filled with a non-conductive material, which serves the functions of sealing and isolating the two parts of the slit. However, ensuring reliable adhesion between the metal and the filler material is technologically challenging, particularly with a straight transverse slit. Furthermore, the non-conductive filler material, typically made of polymers, may often have low tensile strength.

The mechanical loads on a ring worn on a finger, arising in various life situations, could result in damages to the structure.

In the case of the slit shown in Fig. 4b, any combination of mechanical loads along the vectors *F(t)* and *F(c)* will cause certain sections of the filler material to work under "compression." This effectively resists the destruction of the structure.

Additionally, product variants are proposed where design solutions improve mechanical strength while minimizing aesthetic losses caused by the presence of the continuous transverse slit in the ring body.

For example, Figs. 4c, 4d, and 4e illustrate design variations that compensate for the aesthetic losses associated with **the mandatory presence of a through slit** in a metallic finger ring with an integrated NFC transponder.

### BRIEF DESCRIPTION OF THE DRAWINGS

The invention is illustrated by graphical materials.
- Fig. 1 depicts a typical electrical circuit of an NFC transponder.
- Fig. 2 shows an industrial encapsulation-free transponder implemented on a flexible printed circuit board (FPCB).
- Fig. 3 illustrates the moment of making a payment using a payment ring worn on a finger.
- Fig. 4a schematically shows the body of the proposed device (ring) with a single transverse through slit, forming one additional turn of the wire antenna (Variant 1 of the proposed invention).
- Fig. 4b schematically shows the body of the proposed device (ring), where the ring body is an open-loop with a single through slit which has a complex geometric shape different from a straight line (Variant 1 of the proposed invention).
- Fig. 4c schematically shows the body of the proposed device (ring), where the ring body has one through slit of a complex geometric shape different from a straight line, as well as additional grooves along the entire surface of the ring that mirror the shape of the slit, forming a sequential pattern on the surface.
- Fig. 4d schematically shows the body of the proposed device (ring), where the body has a single through slit with a complex geometric shape. Additionally, the body features grooves that, together with the slit, form a pattern with a specific design on part of the ring's surface.
- Fig. 4e schematically shows the body of the proposed device (ring), where the body has a single continuous through slit of any possible geometric shape different from a straight line, "concealed" by a decorative design element, such as a precious or semi-precious stone mounted above the slit.
- Fig. 5 schematically shows the body of the proposed device (ring) with one transverse slit and one longitudinal slit, forming two additional turns of the wire antenna (Variant 2 of the proposed invention).
- Fig. 6a schematically shows the body of the proposed device (ring), where a spiral slit converts the ring body into a spiral antenna (Variant 3 of the proposed invention).
- Fig. 6b illustrates the potential locations for forming recesses in the body (Fig. 6a) to accommodate the NFC transponder chip and external capacitor.
- Fig. 7a schematically shows the body of the proposed device (ring) formed from a metallic strip (Variant 4 of the proposed invention), which additionally includes an external capacitor integrated into the electrical circuit along with the antenna and NFC chip, placed in a recess formed on the inner side of the body.
- Fig. 7b illustrates a possible location for forming a recess in the body depicted in Fig. 7a to accommodate the NFC transponder chip and external capacitor.
- Fig. 8a schematically shows the body of the proposed device (ring), formed from several metallic washers of the same diameter (Variant 5 of the proposed invention), where each washer has a transverse through slit and is designed to connect sequentially to other washers to form an antenna.
- Fig. 8b schematically shows a part of the body of the proposed device (ring), formed from a set of metallic washers (Variant 5 of the proposed invention), as well as a possible location for forming a recess in the body and the placement of a printed circuit board (PCB) with the chip and capacitor mounted on it.
- Fig. 9 shows a test stand for determining the height of stable activation for the tested rings.
- Fig. 10 illustrates a test stand used to confirm the technical result of improved mechanical strength in the proposed device.
- Fig. 11 presents a simplified view of rings with two different types of slits (Variant 1 of the proposed invention) to test the technical result regarding the potential miniaturization of the product.
- Fig. 12 shows three prototypes of the proposed product, each implemented with different designs

### IMPLEMENTATION OF THE INVENTION

The proposed ring-type device, combined with NFC transponder functionality (Figs. 4-8), includes a body (1) made of electrically conductive material and designed in an open-loop form.

Fig. 4a shows a schematic electrical diagram of the connection of the body (1) to the components of the NFC transponder (Variant 1 of the proposed invention): the chip (2), antenna (3), and external capacitor (4). The ring body is made of 925 sterling silver and features a single transverse through slit (5). In this design, the ring body serves as one loop of the antenna (3). The remaining loops of the antenna, necessary to achieve the required inductance, are formed using copper wire.

Fig. 4b schematically shows the body of the proposed device (Variant 1 of the proposed invention), where the ring body (1) is designed in an open-loop form with a single through slit (5) of a complex geometric shape different from a straight line - a slit in the shape of the letter "omega." The antenna loops (3), formed with copper wire, and the chip (2) are housed in a groove located on the inner part of the ring.

Fig. 4c schematically shows the body of the proposed device (Variant 1 of the proposed invention), where the ring body (1) features a single through slit (5) of complex geometric shape different from a straight line, as well as additional grooves (6) along the ring's surface. These grooves mirror the shape of the slit and create a sequential pattern resembling a "Greek meander" design.

Fig. 4d schematically shows the body of the proposed device (ring) (1), which has a single through slit (5) with a complex geometric shape and additional grooves (6). Together, the slit and grooves form a pattern in a specific design on part of the ring's surface.

Fig. 4e schematically shows the body of the proposed device (ring) (1) with a single continuous through slit (5) of any possible geometric shape different from a straight line. The slit is "concealed" with a decorative design element, such as a precious or semi-precious stone (7), mounted over the slit.

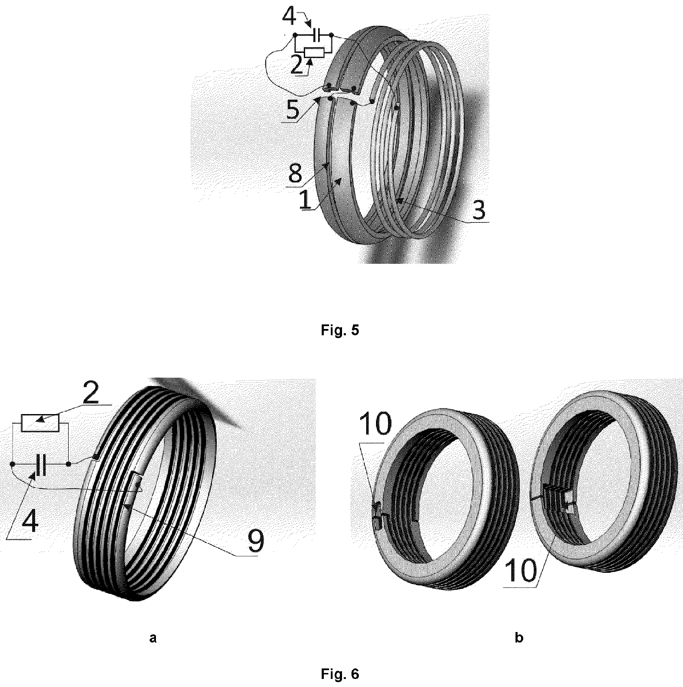

Fig. 5 illustrates another schematic electrical diagram connecting the body (1) to the components of the NFC transponder (Variant 2 of the proposed invention): the chip (2), antenna (3), and external capacitor (4). In this case, the body (1), made of silver, includes a single transverse through slit (5) and a single longitudinal through slit (8), allowing the body to form two additional antenna loops (3). The remaining loops necessary to achieve the required inductance are formed, for example, with copper wire.

Fig. 6a presents a schematic electrical diagram connecting the body to the components of the NFC transponder (Variant 3 of the proposed invention). In this variant, the ring body made of silver features a single continuous spiral slit (9), forming six (6) turns that completely constitute the antenna of the NFC transponder. The antenna ends are connected to the chip (2) and the external capacitor (4).

Fig. 6b illustrates two possible locations for the groove (recess) (10), which serves to house the chip and external capacitor (Variant 2 of the proposed invention).

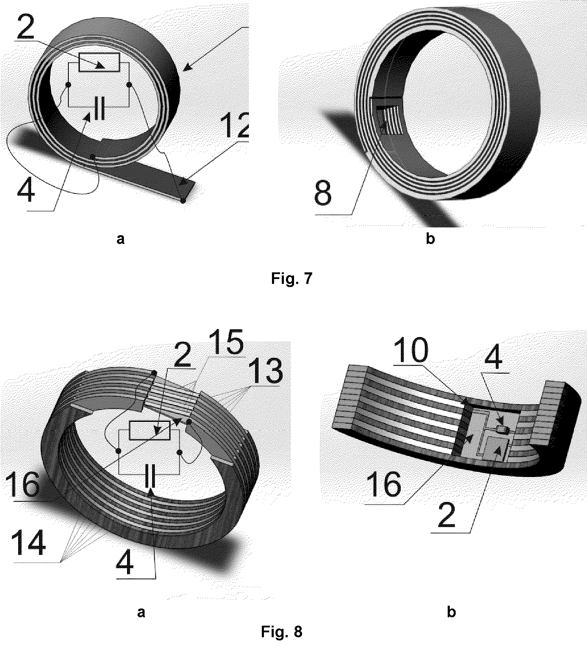

Fig. 7a illustrates a schematic electrical diagram connecting the ring body, formed from a metallic strip (Variant 4 of the proposed invention), to the NFC transponder components. The ring body is formed from a twisted silver strip (11), with one side coated with a dielectric layer (12) to eliminate electrical contact between adjacent loops. This body fully functions as the antenna of the NFC transponder. The number of loops in the twisted strip must meet the inductance requirements of the antenna. The ends of the twisted strip are connected to the chip (2) and the external capacitor (4).

Fig. 7b shows the ring body where, as one variant, a groove (10) is formed within the inner loops to house the chip and external capacitor. In another variant of the ring body (Variant 5 of the proposed invention), the schematic electrical diagram is shown in Fig. 8a, where the ring body is formed from five (5) silver washers (13), each with a transverse through slit. The number of washers corresponds to the number of antenna loops needed to achieve the required inductance. A dielectric layer (14) is placed between the washers. One side of the slit in each washer is electrically connected to the opposite side of the slit in the next washer through jumpers (15). The jumpers can, as one option, be formed on a printed circuit board (PCB) (16), which may also house the chip (2) and capacitor (4) (Fig. 8b). The PCB (16) is located within a groove (10) formed on the inner side of the ring body. This structure forms a ring body that fully functions as the antenna of the NFC transponder.

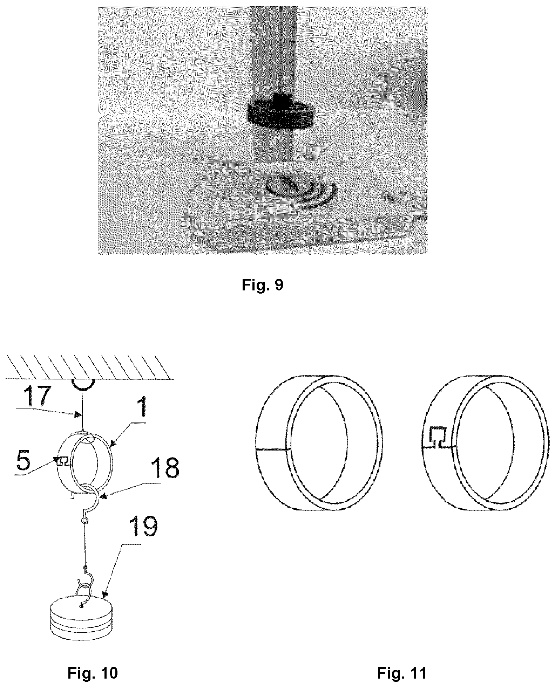

To confirm the technical result-achieving stable interaction between the proposed product and an NFC terminal-a test stand was developed (Fig. 9). The stand consists of an industrial USB NFC reader (ACR 1255U), which provides an audible and visual signal upon establishing stable communication with the NFC transponder, a device for suspending rings with adjustable height positioning above the reader, and a ruler for measuring the activation height.

### Example 1

Tested products-rings: one designed according to Variant 1, one according to Variant 2 of the proposed invention, and a third ring as described in RU2735275C2-were manufactured with the following specifications:
- Material of the body: 925 sterling silver.
- Inner diameter of the ring: 20.5 mm.
- Outer diameter of the ring: 24.5 mm.
- Width of the ring: 4.75 mm.
- Depth of the annular groove: 1.6 mm.
- Width of the annular groove: 3.5 mm.
- Wire for the loop antenna: Copper, diameter 0.1 mm.

Transverse and longitudinal slits on the rings (for Variant 1 and Variant 2) were made with a width of 0.2 mm using laser cutting.

The slits were filled with a two-component polymer, RIVER GLASS, produced by "Propitay."

The resonant frequency of the circuit (adjusted using an external capacitor) was 13.56 ± 0.2 MHz.

Chip: NXP J3H081P1A6/9B872P8, 69 pF.

The results of the tests are presented in Table 1.

**Table 1.**

| Type of tested device | Stable Activation Height, mm |
|---|---|
| Device - a ring with transverse slit manufactured according to RU2735275C2 with 5 wire antenna turns | 25 mm |
| Device - a ring manufactured according to Variant 1 of the claimed solution, with one transverse slit and 4 turns of a wire antenna. | 30 mm |
| Device - a ring manufactured according to Variant 2 of the claimed solution, with one transverse and one longitudinal slit, and 3 turns of a wire antenna. | 33 mm |

### Example 2

The claimed device - a ring according to Variant 3 of the claimed solution (spiral slit) - and a second ring manufactured according to RU2735275C2 were produced with the following characteristics:
- Body material: 925 sterling silver.
- Inner diameter of the ring: 20.5 mm.
- Outer diameter: 24.5 mm.
- Width of the ring: 4.75 mm.
- Depth of the annular groove: 1.6 mm.
- Width of the annular groove: 3.5 mm.

The spiral slit was made with a width of 0.2 mm using laser cutting.

The slits were filled with a two-component polymer RIVER GLASS produced by "Propitay."

Resonant frequency of the circuit (adjusted by using an external capacitor): 13.56 ± 0.2 MHz.

Chip: NXP J3H081P1A6/9B872P8, 69 pF.

The third ring, corresponding to Variant 4 of the claimed solution, with a body made of a twisted metallic strip, was manufactured with the following characteristics:
- Material of the strip: 925 sterling silver.
- Width of the strip: 4.75 mm.
- Thickness of the strip: 0.3 mm.
- Thickness of the insulator layer: 0.1 mm.
- Inner diameter of the ring: 20.5 mm.
- Outer diameter: 24.5 mm.

Resonant frequency of the circuit (adjusted by using an external capacitor): 13.56 ± 0.2 MHz.

Chip: NXP J3H081P1A6/9B872P8, 69 pF.

The test results for the rings of two types, according to Variants 3 and 4 of the claimed solution, as well as the ring manufactured according to RU2735275C2, are presented in Table 2.

**Table 2.**

| Type of tested device | Stable Activation Height, mm |
|---|---|
| Device - a ring with transverse slit manufactured according to RU2735275C2 with 5 wire antenna turns | 25 mm |
| Device - a ring manufactured according to Variant 3 of the claimed solution, a ring with a spiral slit. | 38 mm |
| Device - a ring manufactured according to Variant 4 of the claimed solution, a ring in the form of a twisted strip. | 35 mm |

### Example 3

The tested rings - one according to Variant 5 of the proposed invention and the second according to the prototype - were manufactured with the following characteristics:
- Material of washers: 925 sterling silver.
- Number of washers: 5.
- Thickness of washers: 0.5 mm.
- Material of insulator: Beech veneer.
- Thickness of insulator: 0.5 mm.
- Inner diameter of the ring: 20.5 mm.
- Outer diameter: 24.5 mm.

Resonant frequency of the circuit (adjusted by using an external capacitor): 13.56 ± 0.2 MHz.

Chip: NXP J3H081P1A6/9B872P8, 69 pF.

The test results for the ring manufactured according to Variant 5 and the ring manufactured according to RU2735275C2 are presented in Table 3.

**Table 3.**

| Type of tested device | Stable Activation Height, mm |
|---|---|
| Device - a ring with transverse slit manufactured according to RU2735275C2 with 5 wire antenna turns | 25 mm |
| Device - a ring manufactured according to Variant 5 of the claimed solution; a ring composed of a set of washers sequentially connected to each other. | 35 mm |

### Example 4

The tested devices include one ring according to Variant 1, one ring according to Variant 2 (both manufactured without an external capacitor), and a third ring-the prototype, manufactured according to RU2735275C2-with the following characteristics:
- Material of the body: 925 sterling silver.
- Inner diameter of the ring: 23 mm.
- Outer diameter: 27 mm.
- Width of the ring: 4.75 mm.
- Depth of the annular groove: 1.6 mm.
- Width of the annular groove: 3.5 mm.
- Wire for the loop antenna: Copper, diameter 0.1 mm.

The transverse and longitudinal slits on the rings manufactured according to Variant 1 and Variant 2 were made with a width of 0.2 mm using laser cutting.

The slits were filled with a two-component polymer RIVER GLASS from the company "Propitay."

The resonant frequency of the circuit (without an external capacitor) was 13.56 ± 0.2 MHz.

Chip: NXP J3H081P1A6/9B872P8, 69 pF.

Comparative test results for the rings are presented in Table 4.

**Table 4.**

| Type of tested device | Stable Activation Height, mm |
|---|---|
| Device - a ring with transverse slit manufactured according to RU2735275C2 with 5 wire antenna turns | 28 mm |
| Device - a ring manufactured according to Variant 1 of the claimed solution, a ring with one transverse slit and 4 turns of a wire antenna | 32 mm |
| Device - a ring manufactured according to Variant 2 of the claimed solution, a ring with one transverse and one longitudinal slit, and 3 turns of a wire antenna. | 35 mm |

### Example 5

The tested devices included a prototype from Example 1 and a ring according to Variant 3 (spiral slit) with the following characteristics:
- Body material: 925 sterling silver.
- Inner diameter of the ring: 23 mm.
- Outer diameter: 27 mm.
- Width of the ring: 4.75 mm.

The spiral slit was made with a width of 0.2 mm using laser cutting.

Number of turns: 5.

The slits were filled with a two-component polymer RIVER GLASS from the company "Propitay."

Resonant frequency (without an external capacitor): 13.56 ± 0.2 MHz.

Chip: NXP J3H081P1A6/9B872P8, 69 pF.

Comparative test results for the rings are presented in Table 5.

**Table 5.**

| Type of tested device | Stable Activation Height, mm |
|---|---|
| Device - a ring with transverse slit manufactured according to RU2735275C2 with 5 wire antenna turns | 28mm |
| Device - a ring manufactured according to Variant 3 of the claimed solution, a ring with a spiral slit. | 38mm |

### Example 6

The tested devices included a prototype from Example 1 and a ring according to Variant 4 (twisted strip) with the following characteristics:
- Material of the strip: 925 sterling silver.
- Width of the strip: 4.75 mm.
- Thickness of the strip: 0.3 mm.
- Thickness of the insulator layer: 0.1 mm.
- Inner diameter of the ring: 23 mm.
- Outer diameter: 27 mm.
- Number of turns: 5.

Resonant frequency of the circuit (without an external capacitor): 13.56 ± 0.2 MHz. Chip: NXP J3H081P1A6/9B872P8, 69 pF.

Comparative test results for the rings are presented in Table 6.

**Table 6.**

| Type of tested device | Stable Activation Height, mm |
|---|---|
| Device - a ring with transverse slit manufactured according to RU2735275C2 with 5 wire antenna turns | 28 mm |
| Device - a ring manufactured according to Variant 4 of the claimed solution, a ring in the form of a twisted strip. | 35 mm |

### Example 7

The tested devices include a prototype from Example 1 and two rings according to Variant 5 (set of metallic washers) with the following characteristics:
- Material of the washers: 925 sterling silver.
- Number of washers: 5.
- Thickness of washers: 0.5 mm.
- Material of the insulator: Beech veneer.
- Thickness of the insulator: 0.5 mm.
- Inner diameter of the ring: 23 mm.
- Outer diameter: 27 mm.

Resonant frequency of the circuit (without an external capacitor): 13.56 ± 0.2 MHz. Chip: NXP J3H081 P1A6/9B872P8, 69 pF.

Comparative test results for the rings are presented in Table 7.

**Table 7.**

| Type of tested device | Stable Activation Height, mm |
|---|---|
| Device - a ring with transverse slit manufactured according to RU2735275C2 with 5 wire antenna turns | 28 mm |
| Device - a ring manufactured according to Variant 5 of the claimed solution, a ring consisting of a set of washers sequentially connected to each other using jumpers. | 36 mm |
| Device - a ring manufactured according to Variant 5 of the claimed solution, a ring consisting of a set of washers sequentially connected to each other using a PCB. | 36 mm |

### Example 8

To confirm the technical result of increased mechanical strength, a test stand was created, the operating principle of which is depicted in Fig. 10.

The tested device (ring) according to Variants 1-5 is suspended on a durable thread (17). A calibrated weight (19) is attached to the ring (1), which has the tested slit (5), using a hook (18). During the experiment, the weight of the load is gradually increased. After each weight increment, the ring's mechanical damage and the functionality of the transponder are evaluated.

The test results for various types of rings are presented in Table 8.

**Table 8.**

| Type of device (ring) | Variant 1 - fig. 4a | Variant 1 - fig. 4b | Variant 3 - fig. 6a | Variant 4 - fig. 7b |
|---|---|---|---|---|
| Maximum supported load | 7 kg | 12kg | 21kg | 29kg |

### Example 9

To test the technical result regarding the miniaturization potential of ring-type devices with NFC transponder functionality, a comparative test was conducted using the method described in the previous Example 8. Rings from Variant 1, one with a straight transverse slit (1) and another with a transverse slit of complex geometric shape (2), were tested, as depicted in Fig. 11.

The tests showed that achieving the same tensile strength required increasing the cross-sectional profile of the ring with the straight slit by approximately 50%. This demonstrates that using a slit with a complex geometric shape allows for significant miniaturization of the device.

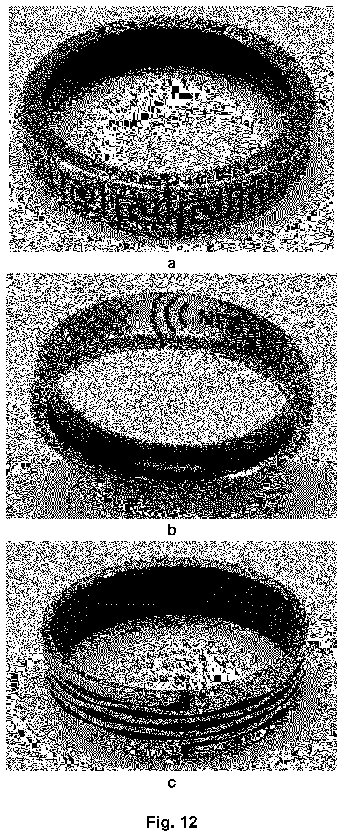

The potential for greater design diversity was confirmed by creating various functional prototypes of devices, some of which are shown in Fig. 12, where:
a) A ring with a repeating pattern resembling a "Greek meander," where one of the meander elements serves as a transverse through slit, and the other elements are decorative grooves.
b) A ring in which one of the graphic elements of the NFC symbol functions as a continuous transverse slit.
c) A ring with a spiral slit of appealing design.

### INDUSTRIAL APPLICABILITY

The invention is applicable in the field of manufacturing ring-type devices for contactless communication, specifically NFC transponders or NFC tags, including those designed as jewelry made of metal or precious metal. The proposed device can be used for user identification, payment transactions at a terminal, and facilitating physical and logical access.

## Claims

1. FINGER RING-TYPE DEVICE FUNCTIONING AS AN NFC TRANSPONDER, comprising a body made of electrically conductive material, wherein the ring body is integrated into a single electrical circuit along with an antenna and an NFC chip embedded in the NFC transponder, **characterized in that** the ring body is designed in an open-loop form with a single through slit: transverse in the shape of a straight line or featuring a complex geometric shape different from a straight line, wherein the ring body is included in the device's electrical circuit, forming at least one loop of the antenna, and the remaining loops of the antenna are formed as a coil of electrical wire or as conductors formed on a flexible printed circuit board (FPCB), placed in a cavity on the inner side of the ring body adjacent to the finger.

2. FINGER RING-TYPE DEVICE FUNCTIONING AS AN NFC TRANSPONDER, the device of claim 1, **characterized in that** the ring body is designed in an open-loop form with a single transverse through slit in the shape of a straight line.

3. FINGER RING-TYPE DEVICE FUNCTIONING AS AN NFC TRANSPONDER, the device of claim 1, **characterized in that** the ring body is designed in an open-loop form with a single through slit featuring a complex geometric shape different from a straight line.

4. FINGER RING-TYPE DEVICE FUNCTIONING AS AN NFC TRANSPONDER, the device of claim 1, **characterized in that** the ring body has a single continuous slit with any possible complex geometric shape distinct from a straight line, as well as at least one additional groove along the entire surface of the ring, mirroring the shape of the continuous slit, forming a sequential pattern on the surface.

5. FINGER RING-TYPE DEVICE FUNCTIONING AS AN NFC TRANSPONDER, the device of claim 1, **characterized in that** the ring body has a single through slit featuring a complex geometric shape, along with additional grooves that, together with the slit, form a specific design pattern on part of the ring's surface.

6. FINGER RING-TYPE DEVICE FUNCTIONING AS AN NFC TRANSPONDER, the device of claim 1, **characterized in that** the ring body has a single continuous slit with any possible complex geometric shape different from a straight line, "concealed" by a decorative design element, such as a precious or semi-precious stone mounted over the slit.

7. FINGER RING-TYPE DEVICE FUNCTIONING AS AN NFC TRANSPONDER, comprising a body made of electrically conductive material, wherein the ring body is integrated into a single electrical circuit along with an antenna and an NFC chip embedded in the NFC transponder, **characterized in that** the ring body is designed in an open-loop form with a single transverse through slit and at least one longitudinal slit, wherein the ring body is included in the device's electrical circuit, forming at least two loops of the antenna, while the remaining loops are formed as a coil of electrical wire, or as conductors formed on a flexible printed circuit board (FPCB), placed in a cavity on the inner side of the ring body adjacent to the finger.

8. FINGER RING-TYPE DEVICE FUNCTIONING AS AN NFC TRANSPONDER, comprising a body made of electrically conductive material, wherein the ring body is integrated into a single electrical circuit of the device along with an NFC chip embedded in the NFC transponder, **characterized in that** the ring body is designed in an open-loop form with a spiral slit, forming an antenna with the required number of loops, and the gaps between the loops are filled with a polymer.

9. FINGER RING-TYPE DEVICE FUNCTIONING AS AN NFC TRANSPONDER, comprising a body made of electrically conductive material, wherein the ring body is integrated into a single electrical circuit of the device along with an NFC chip embedded in the NFC transponder, **characterized in that** the ring body is designed in an open-loop form as a twisted metallic strip, forming an antenna with the required number of loops, with one side of the twisted strip coated with a dielectric layer.

10. FINGER RING-TYPE DEVICE FUNCTIONING AS AN NFC TRANSPONDER, the device of claims 1-9, **characterized in that** it additionally includes an external capacitor integrated into the electrical circuit along with the antenna and the NFC chip, and placed in a recess formed on the inner side of the ring body or on the side surface of the ring body.

11. FINGER RING-TYPE DEVICE FUNCTIONING AS AN NFC TRANSPONDER, comprising a body made of electrically conductive material, wherein the ring body is integrated into a single electrical circuit with an NFC chip embedded in the NFC transponder, **characterized in that** the body is formed from multiple metallic washers of the same diameter, each washer having a transverse through slit, and designed to allow the washers to be sequentially connected to each other to form an antenna. The number of washers corresponds to the number of antenna loops, and one side of the slit in one washer is electrically connected sequentially to one side of the slit in the adjacent washer via jumpers.

12. FINGER RING-TYPE DEVICE FUNCTIONING AS AN NFC TRANSPONDER, the device of claim 11, **characterized in that** the jumpers are formed on a printed circuit board (PCB).

13. FINGER RING-TYPE DEVICE FUNCTIONING AS AN NFC TRANSPONDER, the device of claim 12, **characterized in that** the NFC chip is mounted on the PCB.

14. FINGER RING-TYPE DEVICE FUNCTIONING AS AN NFC TRANSPONDER, the device of claim 12 or claim 13, **characterized in that** the mentioned PCB additionally includes an external capacitor integrated into a single electrical circuit along with the NFC chip and the ring body.
